# EUROPEAN PATENT SPECIFICATION

(11) **EP 1 742 144 B1**
(45) Date of publication and mention of the grant of the patent: **24.10.2018**
(21) Application number: 05106050.7
(22) Date of filing: 04.07.2005
(51) Int. Cl.: G06F 3/042, G06F 3/033, F24C 7/08

(54) **HOUSEHOLD APPLIANCE WITH VIRTUAL DATA INTERFACE**
HAUSHALTSGERÄT MIT VIRTUELLEM DATENSCHNITTSTELLE
APPAREIL MÉNAGER AVEC INTERFACE VIRTUELLE DE DONNÉES

(43) Date of publication of application: 10.01.2007
(60) Divisional application: 10010251.6
(73) Proprietor: Electrolux Home Products Corporation N.V., 1130 Brussels (BE)
(72) Inventor: Kaiser, Kersten, 91541, Rothenburg (DE); Neukamm, Alwin, 91452, Wilhermsdorf (DE); Cenedese, Claudio, 33037, Pasian di Prato (Udine) (IT); Giordano, Roberto, 33050, Pozzuolo del Friuli (Udine) (IT)
(74) Representative: Schröer, Gernot H.

(56) References cited:
- EP-A2- 1 505 350
- WO-A-02/50762
- WO-A-99/40562
- WO-A-02/054169
- WO-A-2004/047011
- WO-A-2005/031552
- DE-A1- 19 629 155
- US-A- 5 380 985
- US-A1- 2002 021 287
- US-A1- 2004 046 795
- US-A1- 2005 088 424

## Description

The present invention relates to a household appliance such as a cooking hob, provided with a virtual data interface.

Nowadays many household appliances are provided with a user interface that allows the user to input commands to the machine. This interface is normally in the form of a keyboard, or in the form of one or more knobs. The same interface is also provided with output means for showing a variety of information such as the user input choices, the machine working status, the machine energy consumption, operation times, settable working cycles and customer care advice.

Both the input both the output means require a dedicated area in the appliance where placing them and their electric equipment. Said area is necessarily in a position of the appliance where the user can easily reach the machine commands or where the user can view them. A typical position for locating the input and/or output means are the frontal panel of the appliance. Even If such positions are quite comfortable from the user point of view, they put considerable problems to the designers who are forced to reserve specific areas of the appliance to such input and output means instead of dedicating said areas to the function performed by the appliance. For example, in a cooking hob of known type a portion of the hob is reserved to the input command interface thereby reducing the surface available for placing pots and/or food to be cooked.

It is also known in the art to provide input and output means integrated in a single unit like, for example, a dynamic keyboard wherein command options and information shown to the user change depending on his choices. A video touch screen is an example of a commonly used dynamic keyboard. However even this solution cannot solve completely the problem of dedicating the most of the space available in the appliance to the performance of its functions. Further, data input means are known from WO 02/054169.

EP 1 505 350 A2 discloses an apparatus for operating a cooking system. The apparatus comprises an optical sensor unit for image recognition and a control unit. The actuation of the control unit by the user is detected by the optical sensor unit.

The aim of the present invention is therefore to solve the noted problems, eliminating the drawbacks of the cited known art and thus providing a household appliance wherein the data interface does not need a reserved area to be placed in the appliance.

Another purpose of the present invention is providing a household appliance wherein the data interface can be made available in different positions.

A further purpose of the present invention is providing a household appliance that can provide the user with many different kinds of information displayed in an area of the appliance that, in the past, was normally not adapted to be used for placing a user interface of known type because of limited space or adverse surface conditions such as surfaces at high temperature.

Advantages, objects, and features of the invention will be set forth in part in the description which follows and in part will become apparent to those having ordinary skill in the art upon examination of the following or may be learned from practice of the invention. The objects and advantages of the invention may be realised and attained as particularly pointed out in the appended claims.

The accompanying drawings, which are included to provide a further understanding of the invention and are incorporated in and constitute a part of this specification, illustrate possible embodiments of the invention and together with the description serve to explain the principles of the invention.

In the drawings:
Figure 1 is a perspective view of a cooking hob according to the invention having a data interface generator producing a virtual data interface on a worktop of a furniture article;
Figure 2 shows a plan view of the cooking hob of figure 1 with a virtual data interface;
Figure 3 is a bottom perspective view of a furniture article adapted to receive a cooking hob;
Figures 4, 5, 6 and 7 show four arrangements for the data interface generator on a cooking hob.

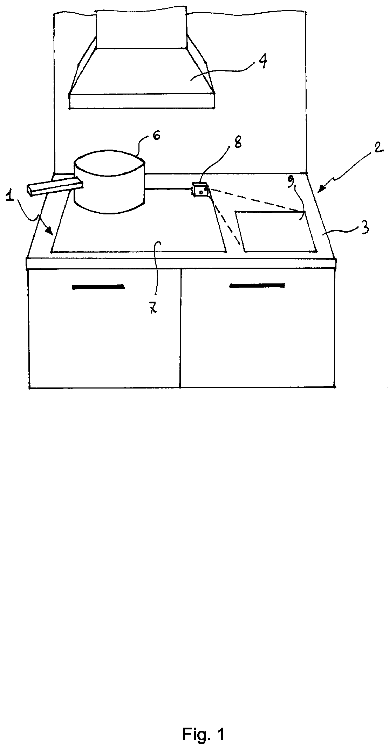

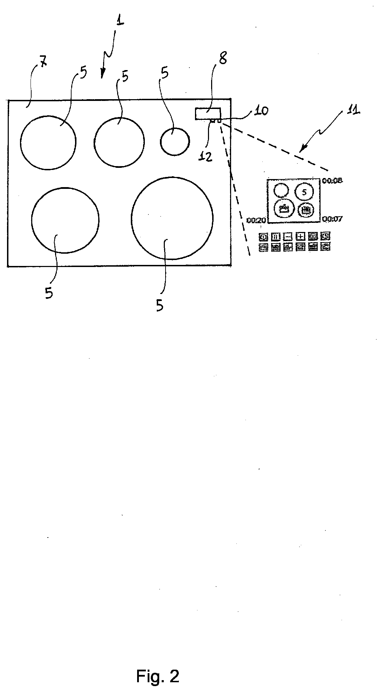

With reference to the figures 1 and 2 a cooking hob 1 of electric type is built in a furniture article 2 having a worktop 3. A hood 4 is placed above the cooking hob 1 for exhausting vapours produced when food is cooked. The cooking hob 1 has heaters 5 for heating a pot 6 placed on the cooking plate 7 and it is further provided with a data interface generator 8 able to produce a virtual data interface 9. The term "virtual" indicates that the data interface 9 is not a physical device but it is in the form of an image projected on a projection surface that can be the above mentioned worktop 3. Such image is obtained providing illumination means 10 for directing an illumination pattern 11 on said projection surface 3.

A data interface generator 8 suitable for the scope of this invention is produced by VKB Inc. The construction and the operating method of the interface generator are described in WO 02/054169. As described in such International Patent Application, a virtual data interface is produced on a projection surface by means of an illumination pattern. In order to detect input from the user, an imaging sensor is provided for sensing light scattered by engagement of a data entry object with said projection surface.

According to the teachings of WO 02/054169, the data interface 9 shown in figures 1 and 2 is sensed by an imaging sensor 12 which comprises an infrared laser diode illuminating the surface area just above the data interface 9. As will be described below, further imaging sensors 12 can be provided for sensing light scattered by objects placed on the cooking hob 1, for example for sensing if and where pots are placed on the hob. The signals produced by the sensors 12 are sent to a data processor that processes them and its output can be used for changing the image shown by the data interface 9, thereby informing the user about the working condition of the cooking hob 1. Signals produced by the sensors viewing the cooking hob 1 can be processed together with the signals coming from the imaging sensor viewing the data interface 9 for considering user input in relation to the presence of pots on the hob 1.

Said data processor is also in signal communication with heaters 5 and other operative means of the hob 1 useful to perform the cooking of food, such as a timer or a thermometer. In this way a user can command the appliance operative means by means of the virtual data interface 9.

Information displayed by the data interface 9 can be of many different kinds. For example it can be shown the status of each heater 5, the time needed to complete the cooking process, or it can be shown text messages like recipes, warning notices or other useful information for the right use of the hob.

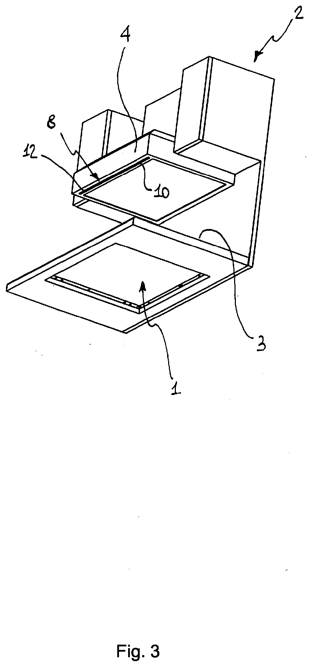

In figure 3 it is shown an embodiment of a furniture article 2 adapted to receive a cooking hob 1. A data interface generator 8 is carried by a hood 4. Illumination means 10 can be oriented by the user or by the manufacturer such that the illumination pattern 11 engages a worktop 3 of a portion of the cooking hob 1. The imaging sensors 12 view the data interface produced by the illumination means 10 and can be adapted to view also the cooking hob 1.

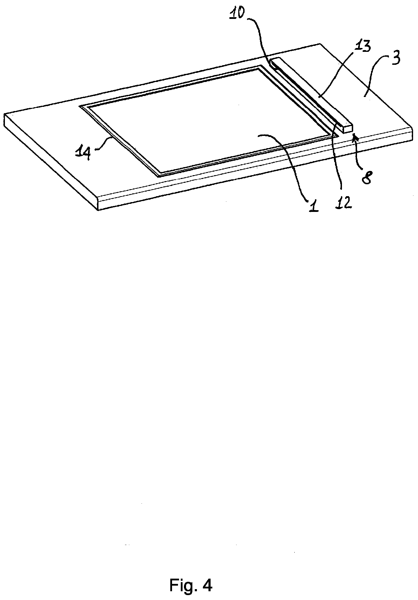

Figure 4 shows a cooking hob 1 built in a worktop 3 wherein a data interface generator 8 is received within a rib 13 displaced in the perimetric edge 14 of the cooking hob 1. The generator 8 has illumination means 10 adapted to direct an illumination pattern on a portion of the cooking hob 1 while imaging sensors 12 viewing the cooking hob surface are provided for sensing both the presence of pots on the hob 1 both the input by the user touching the image formed on the hob by the illumination pattern.

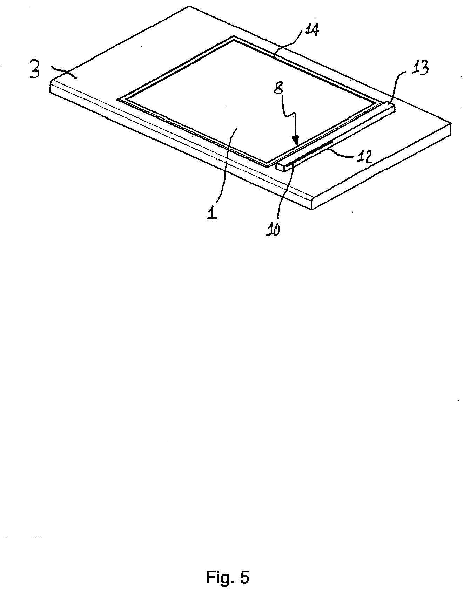

In figure 5 the rib 13 is reversed compared to that shown in figure 4. the interface generator 8 projects a data interface in the form of image on a surface portion of a worktop 3 surrounding the cooking hob. Such projection is similar to that shown in figure 2.

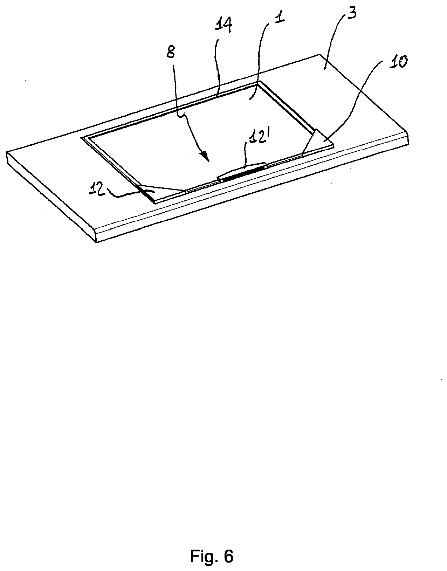

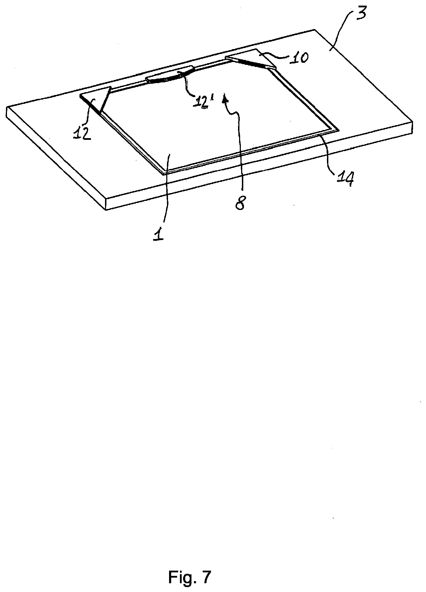

In figure 6 and 7 further arrangements of a data interface generator 8 on a cooking hob 1 are disclosed. Said hob 1 is built in a worktop 3 and the data interface generator comprises illumination means 10 separated by the sensing means 12. Further sensing means 12' are provided for sensing the presence of a user close to the hob 1, as shown in figure 6. illumination means 10 and imaging sensors 12 and 12' are placed on the perimetric edge 14 of the hob 1.

The virtual interface 9 can be projected by the illumination means 10 on at least one plane surface of the household appliance outer frame. Such surface can be preferably the frontal surface or the upper surface of a cabinet containing the appliance operative means.

If desired the data interface generator 8 can be mounted on a support adapted to be oriented in different positions for changing the direction of the illumination pattern 11. In this way the user can place the data interface 9 where he likes. The imaging sensors 12 viewing the interface 9 will follow the change of the orientation covering the area above said interface.

As a further embodiment, said support can be a pop-up support, i.e. a support that can be received within the appliance together with the data interface generator when the latter is not in use and manually or automatically extracted when the user needs to use the appliance.

Conclusively it can be stated that thanks to the provision of a virtual data interface in a household appliance the most of the space available in the appliance can be dedicated to the performance of its functions. For example producing a virtual interface on the side portion of a cooking hob allows the designer to dedicate the whole hob surface to the heaters displacement.

## Claims

1. A household appliance having operative means (5) and a data interface generator (8) in signal communication with said operative means (5), said data interface generator (8) comprising illumination means (10) for directing an illumination pattern (11) on a projection surface (3) thereby defining a data interface (9) in form of image,
and further comprising an imaging sensor (12) viewing said projection surface (3) for sensing light from said illumination means (10) scattered by engagement of a data entry object with said projection surface (3), ,
wherein said operative means (5) are in signal communication with a data processor provided for processing an output from said imaging sensor (12), and
wherein the output of the imaging sensor (12) is processed by the data processor for an image provided on the illumination means (10),
wherein the appliance is a cooking hob (1); wherein the signals produced by the sensors (12) are sent to the data processor that processes them, wherein its output is used for changing the image shown by the data interface (9), thereby informing the user about the working condition of the cooking hob (1),
wherein said data processor is also in signal communication with heaters (5) as operative means of the cooking hob (1), so that a user can command the operative means by means of the data interface (9);
wherein information displayed by the data interface (9) is configured to show the status of each heater (5).

2. A household appliance according to any preceding claim comprising an outer frame having at least one plane surface adapted to act as projection surface.

3. A household appliance according to any preceding claim wherein said data interface generator (8) is mounted on a support adapted to be oriented in different positions for changing the direction of said illumination pattern (11).

4. A household appliance according to any preceding claim wherein said data interface generator (8) is mounted on a pop-up support which can be received within said appliance together with the data interface generator (8) when the latter is not in use.

5. A household appliance (1) according to claim 1 having a perimetric edge (14) and a rib (13) displaced in said the perimetric edge, said rib (13) being adapted to receive said data interface generator (8).

6. A household appliance (1) according to claim 1 or 5 adapted to be built in a worktop (3) of a furniture article (2) wherein said data interface generator (8) is adapted to project a data interface (9) in the form of image on a surface portion of the said worktop (3) surrounding the cooking hob (1).

## Patentansprüche

1. Haushaltsgerät, das Betriebsmittel (5) und einen Datenschnittstellengenerator (8) in Signalkommunikation mit den Betriebsmitteln (5) aufweist, wobei der Datenschnittstellengenerator (8) Beleuchtungsmittel (10) zum Richten eines Beleuchtungsmusters (11) auf eine Projektionsfläche (3) umfasst, wodurch eine Datenschnittstelle (9) in Form eines Bilds definiert wird,
und ferner einen Bildsensor (12) umfasst, der die Projektionsfläche (3) betrachtet, um Licht von dem Beleuchtungsmittel (10) wahrzunehmen, das durch Eingreifen eines Datenerfassungsobjekts in die Projektionsfläche (3) gestreut wird,
wobei die Betriebsmittel (5) in Signalkommunikation mit einem Datenprozessor sind, der zum Verarbeiten einer Ausgabe aus dem Bildsensor (12) vorgesehen ist, und wobei die Ausgabe des Bildsensors (12) vom Datenprozessor für ein Bild verarbeitet wird, das auf dem Beleuchtungsmittel bereitgestellt (10) wird,
wobei das Gerät ein Kochfeld (1) ist; wobei die Signale, die von den Sensoren (12) erzeugt werden zum Datenprozessor gesendet werden, der sie verarbeitet, wobei dessen Ausgabe zum Ändern des Bilds verwendet wird, das von der Datenschnittstelle (9) gezeigt wird, wodurch der Benutzer über den Arbeitszustand des Kochfelds (1) informiert wird,
wobei der Datenprozessor auch in Signalkommunikation mit Heizvorrichtungen (5) als Betriebsmittel des Kochfelds (1) steht, sodass ein Benutzer die Betriebsmittel anhand der Datenschnittstelle (9) steuern kann;
wobei von der Datenschnittstelle (9) angezeigte Informationen zum Anzeigen des Status jeder Heizvorrichtung (5) konfiguriert ist.

2. Haushaltsgerät nach einem der vorhergehenden Ansprüche, das einen Außenrahmen umfasst, der mindestens eine ebene Oberfläche aufweist, die so ausgebildet ist, dass sie als Projektionsfläche dient.

3. Haushaltsgerät nach einem der vorhergehenden Ansprüche, wobei der Datenschnittstellengenerator (8) an einem Träger befestigt ist, der zum Richten in verschiedene Positionen ausgebildet ist, um die Richtung des Beleuchtungsmusters (11) zu ändern.

4. Haushaltsgerät nach einem der vorhergehenden Ansprüche, wobei der Datenschnittstellengenerator (8) an einem Aufklappträger befestigt ist, der zusammen mit dem Datenschnittstellengenerator (8) innerhalb des Geräts aufgenommen werden kann, wenn letzterer nicht in Gebrauch ist.

5. Haushaltsgerät (1) gemäß Anspruch 1, das eine perimetrische Kante (14) und eine Rippe (13) aufweist, die in die perimetrischen Kante versetzt ist, wobei die Rippe (13) zum Empfangen des Datenschnittstellengenerators (8) ausgebildet ist.

6. Haushaltsgerät (1) nach Anspruch 1 oder 5, das zum Einbau in eine Arbeitsfläche (3) eines Möbelgegenstands (2) ausgebildet ist, wobei der Datenschnittstellengenerator (8) zum Projizieren einer Datenschnittstelle (9) in Form eines Bilds auf einem Oberflächenabschnitt der Arbeitsfläche (3) ausgebildet ist, die das Kochfeld (1) umgibt.

## Revendications

1. Appareil ménager ayant des moyens fonctionnels (5) et un générateur d'interface de données (8) en communication de signal avec lesdits moyens fonctionnels (5), ledit générateur d'interface de données (8) comprenant des moyens d'éclairage (10) pour diriger un motif d'éclairage (11) sur une surface de projection (3), définissant ainsi une interface de données (9) sous la forme d'image,
et comprenant en outre un capteur d'imagerie (12) visualisant ladite surface de projection (3) pour détecter de la lumière provenant desdits moyens d'éclairage (10) diffusée par engagement d'un objet d'entrée de données avec ladite surface de projection (3),
lesdits moyens fonctionnels (5) étant en communication de signal avec un processeur de données destiné à traiter une sortie dudit capteur d'imagerie (12), et
la sortie du capteur d'imagerie (12) étant traitée par le processeur de données pour une image fournie sur les moyens d'éclairage (10),
l'appareil ménager étant une table de cuisson (1); les signaux produits par les capteurs (12) étant envoyés au processeur de données qui les traite, sa sortie étant utilisée pour changer l'image montrée par l'interface de données (9), informant ainsi l'utilisateur de la condition de travail de la table de cuisson (1),
ledit processeur de données étant également en communication de signal avec des éléments chauffants (5) comme moyens fonctionnels de la table de cuisson (1), de telle sorte qu'un utilisateur peut commander les moyens fonctionnels au moyen de l'interface de données (9);
des informations affichées par l'interface de données (9) étant configurées pour montrer l'état de chaque élément chauffant (5).

2. Appareil ménager selon l'une quelconque des revendications précédentes, comprenant un cadre externe ayant au moins une surface plate apte à servir de surface de projection.

3. Appareil ménager selon l'une quelconque des revendications précédentes, dans lequel ledit générateur d'interface de données (8) est monté sur un support adapté pour être orienté dans différentes positions pour changer la direction dudit motif d'éclairage (11).

4. Appareil ménager selon l'une quelconque des revendications précédentes, dans lequel ledit générateur d'interface de données (8) est monté sur un support télescopique qui peut être reçu à l'intérieur dudit appareil conjointement avec le générateur d'interface de données (8) lorsque ce dernier n'est pas en utilisation.

5. Appareil ménager (1) selon la revendication 1, ayant un bord périphérique (14) et une nervure (13) décalée dudit bord périphérique, ladite nervure (13) étant adaptée pour recevoir ledit générateur d'interface de données (8).

6. Appareil ménager (1) selon la revendication 1 ou 5, adapté pour être intégré dans un plan de travail (3) d'un meuble (2), ledit générateur d'interface de données (8) étant adapté pour projeter une interface de données (9) sous la forme d'image sur une partie de surface dudit plan de travail (3) entourant la table de cuisson (1).
